# EUROPEAN PATENT SPECIFICATION

(11) **EP 3 237 816 B1**
(45) Date of publication and mention of the grant of the patent: **17.02.2021**
(21) Application number: 15820133.5
(22) Date of filing: 21.12.2015
(51) Int. Cl.: F24S 25/00

(54) **A ROOF OR WALL COVERING SYSTEM, A PANEL AND METHOD FOR INSTALLING PANELS**
DACH- ODER WANDVERKLEIDUNGSSYSTEM, PLATTE UND VERFAHREN ZUR INSTALLATION VON PLATTEN
SYSTÈME DE COUVERTURE DE TOIT OU DE MUR, PANNEAU ET PROCÉDÉ D'INSTALLATION DE PANNEAUX

(30) Priority: 22.12.2014 NL 1041128
(43) Date of publication of application: 01.11.2017
(73) Proprietor: Tulipps Solar International B.V., 5145 PW Waalwijk (NL)
(72) Inventor: WIDLAK, Eugenio Julius Alphonsus Maria, 5145 PW Waalwijk (NL); STASSEN, Petrus Paulus Carolus Maria, 5145 PW Waalwijk (NL)
(74) Representative: DeltaPatents B.V.
(86) International application number: PCT/EP2015/080775
(87) International publication number: WO 2016/102452

(56) References cited:
- EP-A2- 2 362 034
- WO-A1-00/12839
- JP-A- 2006 278 738
- JP-A- 2012 237 165
- US-A- 5 125 608
- US-A1- 2007 157 963
- US-A1- 2014 014 165

## Description

The invention is related to a system comprising installed panels, wherein a number of rectangular panels are connected to elongated support elements, the panel having a first long edge and parallel thereto a second long edge and two parallel short edges perpendicular to said long edges, wherein a panel comprises a rectangular plate like element, the system being provided with connection members for attaching a panel to the support elements, wherein two or more first connection members are present along said first long edge of a panel and two or more second connection members are present along the second long edge of a panel, and wherein each connection member comprises two parts being attachable to each other, wherein one of said parts is attached to a panel and the other part is attached to a support element, wherein said two parts of each first connection member are able to rotate with respect to each other around an axis parallel to said long edges of the panel when these two parts are attached to each other and wherein said two parts of each second connection member engage each other in such manner that they cannot move with respect to each other in a direction perpendicular to the plate like element of the panel after they are moved towards each other. Such system is described in publication WO 00/12839A1.

A panel to be installed against elongated support elements is described in JP2012-237165.

The outer surface of an existing building can be covered with panels in order to improve the appearance of the building. For example, an old or damaged wall can be covered by plates of high pressure laminate, being a material that can have any color or combination of colors, and being a weather resistant material. The outer surface of a new building, or a part of the outer surface, can be formed by such plates, whereby the panels can be an integrated portion of the building. The system according to the invention can also be used for installing panels in a horizontal plane, for example suspending from a ceiling or on a horizontal roof.

Furthermore, the system according to the invention can be used for installing solar panels against the outer surface of a building, or for making solar panels an integrated portion of the building, so forming a portion of the outer surface of the building. The system can be used for installing panels in a vertical plane or for installing panels on an inclined roof. The system can also be used for installing panels apart from a building, for example on the ground and forming an inclined surface of a number of panels, for example as the case may be with solar panels.

In case the rectangular panel is square, whereby the said long edges and the said short edges are equal, two long opposite edges is to be understood as two opposite sides, and the two short edges are to be understood as the other sides. In general, the panels are rectangular, but the rectangular panel may have a missing portion, for example when the panel has to be installed at the location where a chimney on a roof is present, while the panels should surround that chimney.

An object of the invention is a system comprising installed rectangular panels being connected with support elements, whereby an efficient connection between the panels and the support elements is achieved without the use of tools, when the panels are installed on the support elements.

Another object of the invention is a system comprising installed rectangular panels being connected to support elements, whereby the panels can be installed in an efficient manner in a tiled mutual relation, whereby the panels have partly an overlap.

Another object of the invention is a system comprising installed rectangular panels being connected to support elements, whereby an installed panel can be easily removed without removing the surrounding panels.

In order to comply with one or more of these objects, a panel comprises a holder being attached to the back side of the plate like element of the panel, wherein the holder is provided with parts of the first connection member and with parts of the second connection members, and wherein a part of said first connection member comprises a bar extending parallel to said long edges of the panel and wherein the other part of the first connection member comprises a portion engaging said bar by contacting two opposite sides of the bar in such way that the panel can move in a direction parallel with respect to the short edges of the panel. Thereby, each part of each connection member can be an integrated portion of a support element, or can be an integrated portion of the holder being located at the backside of the plate like element. Because said first connection members allow a movement of the panel in its plane, the second connection members define the location of the installed panel.

In order to install a panel against the support elements, the parts of the first connection members are attached to each other, so that the panel can rotate with respect to the support elements around an axis near its first long edge and parallel to that edge, and, furthermore, the panel can be displaced parallel to its plane. Subsequently, by rotating the panel, the two parts of the second connection members are brought towards each other, where after these two parts engage each other automatically, so that the panel is fixed against the support element. In case of a tiled relationship of the panels, whereby the first long edge of a panel is located at the backside of a higher adjacent panel, the lower located panel can be installed after the higher located panel is installed, because the upper long edge of that panel can be moved behind a neighboring higher located panel while the first connection members of that lower located panel are in an engaged position. An advance of such installation is that the installation can start with attaching the higher array of panels to the support elements, and subsequently the lower array of panels. So, the installation of the panels can start at the top of the roof, being an important advantage.

In a preferred embodiment of the invention, the holder comprises two or more elongated holder members located at the backside of the plate like element and extending parallel to said short edges of the panel, wherein at least two holder members are provided with a part of a first connection member and with a part of a second connection member. The holder can be glued against the remainder part of the panel, but can also be fixed in any other suitable manner. The holder members can be identical molded parts made of plastic, and the parts of the connection members can be an integrated portion of such molded holder member. In a more preferred embodiment, the holder comprises three said holder members, each provided with a part of said first connection member and with a part of said second connection member. Thereby, each of the three holder members extend along a support element.

The bar can be an integrated portion of a holder member, however, in a preferred embodiment of the invention, said bar is attached to a support element, wherein the length of the bar is less than two times the dimension of the support element in the direction of said long edges of the panel. Thereby, the support elements can be provided with the bars during production of the support elements, and the holder of the panel can be provided with the other part of the first connection members when the panels or the holder members are manufactured, enabling an easy and efficient installation of the panels.

In a preferred embodiment of the invention, a part of said second connection member comprises a pivot member being able to pivot around a pivot axis extending parallel to said plate like element, wherein said pivot member is able to engage a portion of the other part of the second connection member by turning around said pivot axis from a disengaged position into an engaged position, and wherein said pivot member is able to disengage said portion of the other part of the second connection member by turning around said pivot axis from said engaged position into said disengaged position. Thereby, spring means can be present in order to push the pivot member in its engaged position when it approaches the other part of the second connection member. In a preferred embodiment of the invention, said pivot axis extend parallel to said long edges of the panel.

In a preferred embodiment of the invention, the shape of the pivot member is such that its center of gravity is located at one side of the vertical plane trough the pivot axis of the pivot member, so that the gravitation pushes the pivot member in its engaged position. Furthermore, in a preferred embodiment of the invention, the pivot member is provided with a surface being inclined with respect to a plane through said pivot axis and perpendicular to the plate like element of the panel, which surface can contact said other part of the second connection member when the two parts of the second connection member are moved towards each other, in order to push the pivot member in its disengaged position. Said surface can be a part of the edge of the pivot member. So, after the first connection members are attached to each other, the further installation of a panel take place by rotating the panel, whereupon the two parts of the second connection member approach each other and engage each other automatically, after the pivot member is brought in its disengaged position, and subsequently in its engaged position. This will be further elucidated when describing an embodiment of the invention.

In a preferred embodiment of the invention, said pivot member is provided with a cam having a surface to be pushed by means of a separate disengaging tool in order to rotate the pivot member from its engaged position into its disengaged position, said surface of said cam being located near the back side of the plate like element. The disengaging tool has such shape that it can be moved behind an edge of the panel in order to reach said surface of the cam of the pivot member and push against it in order to bring the pivot member in its disengaged position, whereupon the panel can be rotate into an inclined position with respect to the support elements, and then be removed from the support elements, without removing the surrounding panels. This will be further elucidated when describing an embodiment of the invention.

The panels can be positioned next to each other to the support elements. However, in a preferred embodiment of the invention, adjacent panels are positioned in a tiled relationship, whereby the first long edge of a panel is located at the backside of an adjacent panel. In particular when the panels are installed on an inclined roof, the overlap of the panels prevent rainwater from penetrating behind the panels other than between the short edges of the panels. However, behind the short edges are the support elements forming a gutter for draining away the rainwater.

In case a panel has to be removed, said disengaging tool can be moved between the overlapping portion of the panels, so that it can reach said surface of said cam of the pivot member in order to push the pivot member into its disengaged position. Another advantage of locating the first long edge of the lower panel behind the plate like element of the higher panel is the fact that when installing overlapping panels on an inclined roof or against vertical support elements, the panels can be installed starting with the highest horizontal array of panels, and subsequently the adjacent lower array of panels and so on. Such installation is much easier and more efficient than starting with the lowest array and working from a lower level to a higher level, as is the case with roofing tiles.

Preferably, the support elements are elongated elements having a length of more than two times the length of said short edges of the panels and extending parallel to said short edges, so that a solid support of the panels can be achieved. And, preferably, the panel is attached to three support elements, two located near the ends of the long edges of the panel and one in the middle of the long edges.

In a preferred embodiment of the invention, at least a number of the panels are solar panels, wherein the plate like element comprises a glass plate provided with a number of photovoltaic cells at its backside. The system according to the invention is in particular suited for installing solar panels, because it makes it possible to replace easily a panel surrounded by other panels in case of a defective panel.

Preferably, the edge of the plate like element is the rectangular edge of the panel, so that the panel is not provided with a surrounding frame, which is often the case with solar panels. Preferably, the short edge of the panel is at least 0.6 meter and in the long edge of the panel is at least 1.2 meter. The solid installation of the panels permits such large panels.

In a preferred embodiment of the invention, the system comprising a first horizontal array of panels and next to that array a second horizontal array of panels, wherein adjacent short edges of panels in said first array are positioned in the middle of the long edges of panels in the second array.

Furthermore, the invention is related to a rectangular panel to be installed against elongated support elements provided with first and second connection bars extending in transverse direction, the panel having a first long edge and parallel thereto a second long edge and two parallel short edges perpendicular to said long edges, the panel comprising:
- a rectangular plate like element,
- at least two elongated holder members attached to the back side of the plate like element and extending parallel to said short edges of the panel, each elongated holder member comprising
- one first connection part arranged along said first long edge of the panel,
- one second connection part arranged along said second long edge of the panel, wherein said first connection parts and second connection parts are respectively configured for attaching the panel to the first and second bars of the support elements, wherein each first connection part comprises a clip arranged to contact two opposite sides of the first connection bar of the support element, such that the clips are able to rotate with respect to the first bar around an axis parallel to said long edges of the panel when these two connection parts are attached to each other and such that the panel can move in a direction parallel with respect to the short edges of the panel, and wherein each second connection part comprises a pivot member being able to pivot around a pivot axis extending parallel to said long edges of the panel, wherein said pivot member is able to engage the second connection bar of the support element by turning around said pivot axis from a disengaged position into an engaged position in which these parts cannot move with respect to each other in a direction perpendicular to the plate like element, and wherein said pivot member is able to disengage the second connection bar by turning around said pivot axis from said engaged position into said disengaged position.

In a preferred embodiment of the invention, three elongated holder members are present, each provided with a part of the first connection member and a part of the second connection member.

Furthermore, the invention is related to a method for installing panels against elongated support elements, the panel having a first long edge and parallel thereto a second long edge and two parallel short edges perpendicular to said long edges, whereby the panel comprises a rectangular plate like element and is to be attached with connection members to said support elements, whereby the panel is provided with parts of a first connection member and with parts of a second connection member, whereby parts of two or more first connection members are present along said first long edge of the panel and two or more parts of second connection members are present along said second long edge of the panel, whereby other parts are attached to said support elements, whereby the two parts of each first connection member are able to rotate with respect to each other around an axis parallel to said long edges of the panel after connecting these two parts with each other, and whereby said two parts of each second connection member engage each other in such manner that they cannot move with respect to each other in a direction perpendicular to the plate like element of the panel, whereby two or more elongated holder members are attached to the back side of the plate like element and extend parallel to said short edges of the panel, and whereby at least two holder members are each provided with a part of a first connection member and a part of a second connection member, and whereby a part of said first connection member comprises a bar extending parallel to said long edges of the panel, and whereby the other part of the first connection member comprises a portion engaging said bar by contacting two opposite sides of the bar in such way that the panel can move in a direction parallel with respect to the short edges of the panel, whereby the parts of first connection members of a panel are connected with each other and subsequently the panel is rotated so that the parts of the second connection members approach each other and then engage each other.

The invention will now be further elucidated by means of a description of an embodiment of a system comprising installed solar panels, whereby reference is made to the drawing comprising schematic and diagrammatical figures, whereby:
Figure 1 is a perspective view of installed solar panels;
Figure 2 is a perspective view of a support element;
Figure 3 is a side view of installed solar panels, and
Figure 4 shows an enlarged portion of figure 3.

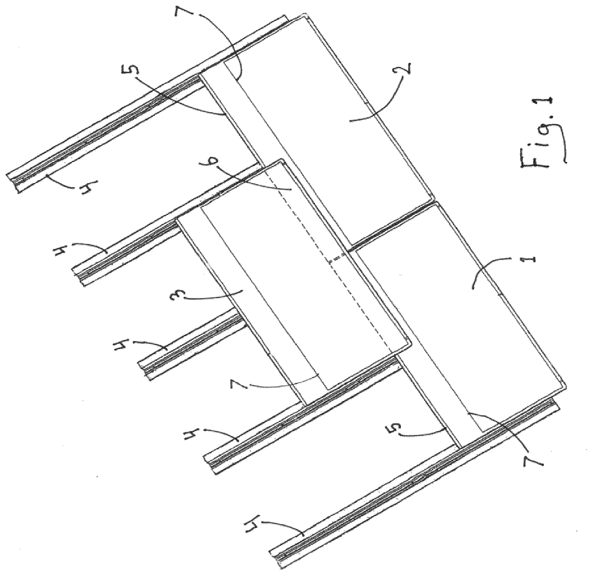

Figure 1 shows the positioning of solar panels 1,2,3 on an inclined roof of a building. Only five support elements 4 and three solar panels 1,2,3, are reproduced in figure 1. The support elements 4 are attached to the inclined roof and the panels 1,2,3, are mounted against the support elements 4. The panels 1,2 are positioned in a lower horizontal array of panels and panel 3 is a panel of the adjacent higher array of panels.

The panels 1,2,3 are arranged in a tiled mutual relation, whereby the panels have partly an overlap. That means that the higher edge 5 of the panels 1,2 of the lower array is positioned behind the lower portion 6 of the higher array of panels 3.The solar panels 1,2,3, has a rectangular front plate of glass and behind the glass are photovoltaic cells, located in the lower part of the panel, indicated with rectangle 7. So, the portion of the panels 1,2 of the lower array positioned behind the higher array of panels 3 is not provided with photovoltaic cells.

Each panel 1,2,3 is connected to three support elements 4. At the backside of each panel 1,2,3 are three elongated holder members 14 (not shown in figure 1) glued to the remainder part of the panel and located along the support elements 4. Each holder member 14 is connected with the support elements 4 near its lower end and near its higher end, as will be further explained hereafter.

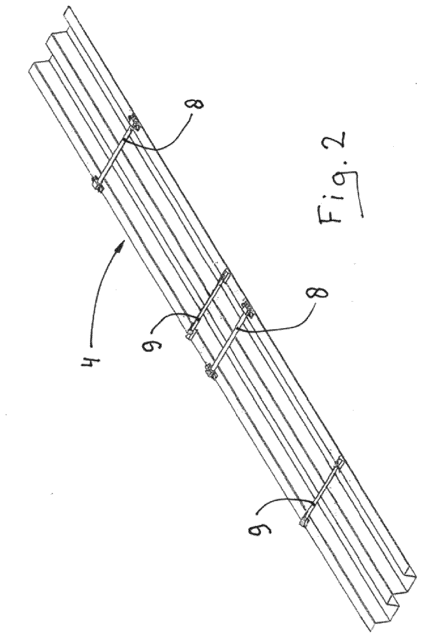

Figure 2 shows an elongated (oblong) support element 4 in perspective view. The support element 4 is made of steel and can be attached to a building or to another object by means of screws, bolts or other fastening means. At its front side, the support element 4 is provided with bars 8,9 in transverse direction. Each bar 8,9 is a part of a connection member 12,13 for attaching the panels 1,2,3 to the support elements 4, as will be explained hereafter.

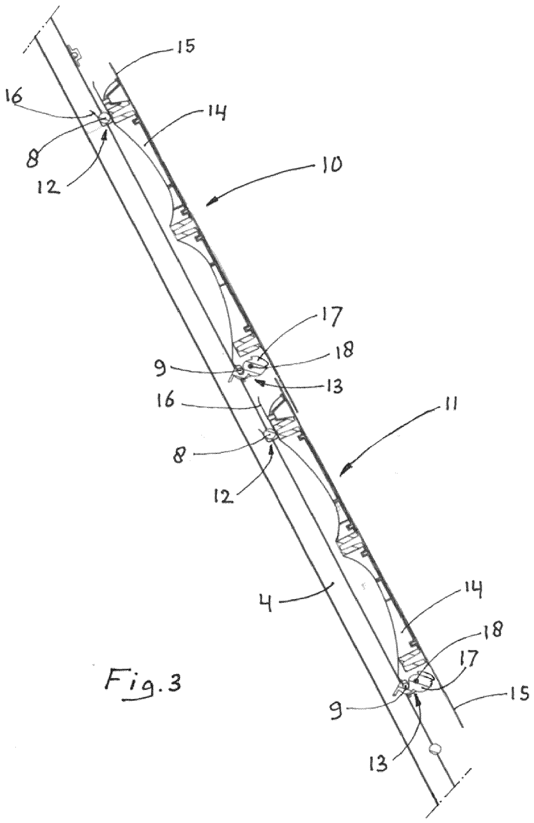

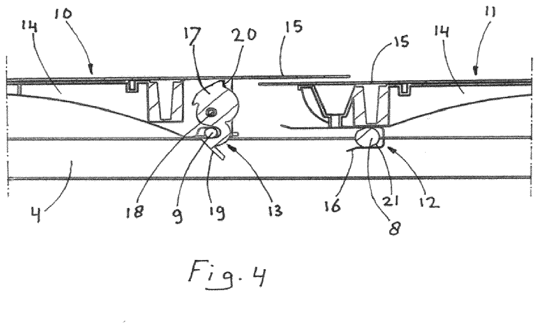

Figure 3 shows two installed panels 10,11 in side view, and figure 4 is an enlarged portion of figure 3. The two panels 10,11 are mounted against support elements 4 by means of first connection members 12 and second connection members 13. Each panel 10,11 has three oblong holder members 14, one along each of the three support members 4 to which the panels 10,11 are mounted. The holder members 14 are glued against the plate like element 15 of the panels 10,11. So, each panel 10,11 is connected with three first connection members 12 and three second connection members 13 to the support elements 4. Plate like element 15 is a rectangular glass plate provided with photovoltaic cells at its back side in common with further means for electrically connecting the cells in strings and with a junction box, as is usual with a solar panel. A further glass plate may form the back side of the plate like element 15, to which glass plate the holder members 14 are glued. Instead of a further glass plate also a cover foil of other material can be used.

First connection member 12 has two parts being a bar 8 attached to support element 4 and a clip 16 attached to holder member 14. Clip 16 is a metal strip shown in side view in the figures 3,4. Clip 16 engages bar 8, so that the panel 10,11 can not move in a direction perpendicular to its plane, but can rotate around bar 8. Bar 8 has two parallel flat portions 21 at opposite sides, so that the bar 8 is being clamped in clip 16 when the panel 11 rotates to its position parallel to the support elements 4, and can not move in a direction perpendicular to the plane of the plate like element 15.

Second connection member 13 has also two parts, a bar 9 attached to support element 4 and a pivot member 17 being able to rotate around shaft 18 (pivot axis). The figures 3,4 show pivot member 17 in its engaged position, whereby pivot member 17 engages bar 9, so that the panel 10,11 is firmly connected with the support element 4.

The panels 10,11 are installed on the support elements 4 as follows. The two parts 8,16 of first connection member 12 are brought near each other while the plane of the panel (10,11) is held inclined with respect to the support elements 4. Then the panel 10,11 is moved in such way that the clip 16 becomes in engagement with bar 8 on the support element 4. Thereafter panel 10,11 is rotated around bar 8 so that the two parts 9,17 of the second connection member 13 approaches each other. Thereby, bar 8 becomes in a clamping position in clip 16, because the distance of the flat portions 21 at opposite sides of bar 8 is less than the diameter of the cylindrical surface of bar 8. Pivot member 17 is provided with an edge 19 (figure 4), so that pivot member 17 rotates to its disengaged position when the two parts 9,17 of the second connection member 13 approach each other. The shape of the pivot member 17 is such that its center of gravity is located at the right side of the vertical plane trough the pivot axis 18 of pivot member 17, so that the gravitation pushes and keeps the pivot member 17 in its engaged position, which position is shown in the figures 3,4. In addition thereto, or as an alternative embodiment, spring means can be present in order to push and keep the pivot member 17 in its engaged position.

In order to remove a panel (10,11) from the support elements 4, the pivot member 17 is provided with a cam 20 (figure 4) having a surface extending up to the lower site of plate like element 15, so that said surface of cam 20 can be pushed to the left direction by means of a disengaging tool that is moved between the two overlapping plate like elements 15. The pivot member 17 rotates thereby in its disengaged position. The surface to be pushed may be located at any place that can be reached by a tool that passes the space between two adjacent panels (10,11), also when no overlapping of the panels is present. To remove the panel 10,11, it can then be rotated around bar 8 whereby it moves upwards, so that the two parts 9,17 of the first connection member 12 can be separated by moving the panel 10,11 away from bar 9. In this manner a panel 10,11 can be removed from the support elements 4 without removing the surrounding panels 10,11.

While the invention has been illustrated in the figures and the foregoing description, such illustration and description are to be considered illustrative and exemplary and not restrictive; the invention is not limited to the disclosed embodiment.

## Claims

1. A system comprising installed panels, wherein a number of rectangular panels (10,11) are connected to elongated support elements (4), the panels (10,11) having a first long edge and parallel thereto a second long edge and two parallel short edges perpendicular to said long edges, wherein the panels (10,11) comprise a rectangular plate like element (15), the system being provided with connection members (12,13) for attaching a panel (10,11) to the support elements (4), wherein two or more first connection members (12) are present along said first long edge of a panel (10,11) and two or more second connection members (13) are present along the second long edge of a panel (10,11), and wherein each connection member (12,13) comprises two connection parts (8,16;9,17) being attachable to each other, wherein one of said connection parts (16,17) is attached to a panel and the other connection part (8,9) is attached to a support element (4), wherein said two connection parts (8,16) of each first connection member (12) are able to rotate with respect to each other around an axis parallel to said long edges of the panel (10,11) when these two connection parts (8,16) are attached to each other and wherein said two connection parts (9,17) of each second connection member (13) engage each other in such manner that they cannot move with respect to each other in a direction perpendicular to the plate like element (15) of the panel (10,11) after they are moved towards each other, **characterized in that** the panels (10,11) comprise a holder (14) being attached to the back side of the plate like element (15) of the panel (10,12), wherein the holder (14) is provided with first connection parts (16) of the first connection member (12) and with second connection parts (17) of the second connection members (13), and wherein a connection part of said first connection member (12) comprises a bar (8) extending parallel to said long edges of the panel (10,11) and wherein the other connection part of the first connection member (12) comprises a portion (16) engaging said bar (8) by contacting two opposite sides of the bar (8) in such way that the panel can move in a direction parallel with respect to the short edges of the panel (10,11).

2. A system comprising installed panels according to claim 1, wherein the holder comprises two or more elongated holder members (14) located at the backside of the plate like element (15) and extending parallel to said short edges of the panel (10,11) and wherein at least two holder members (14) are provided with a first connection part (16) of a first connection member (12) and with a second connection part (17) of a second connection member (13).

3. A system comprising installed panels according to claim 1, wherein a panel (10,11) comprises three said holder members (14), each provided with a first connection part (16) of a first connection member (12) and with a second connection part (17) of a second connection member (13).

4. A system comprising installed panels according to anyone of the preceding claims, wherein said bar (8) is attached to a support element (4).

5. A system comprising installed panels according to any one of the preceding claims, wherein the second connection part comprises a pivot member (17) being able to pivot around a pivot axis (18) extending parallel to said plate like element (15), wherein said pivot member (17) is able to engage a portion of the other connection part (9) of the second connection member (13) by turning around said pivot axis (18) from a disengaged position into an engaged position, and wherein said pivot member (17) is able to disengage said portion of the other connection part (9) of the second connection member (13) by turning around said pivot axis (18) from said engaged position into said disengaged position.

6. A system comprising installed panels according to claim 5, wherein said pivot axis (18) extend parallel to said long edges of the panel (10,11).

7. A system comprising installed panels according to claim 5 or 6, wherein the shape of the pivot member (17) is such that its centre of gravity is located at one side of a vertical plane through the pivot axis (18) of the pivot member (17), so that the gravitation pushes the pivot member (17) in its engaged position.

8. A system comprising installed panels according to any one of claims 5-7, wherein the pivot member (17) is provided with a surface (19) being inclined with respect to a plane through said pivot axis (18) and perpendicular to the plate like element (15) of the panel (10,11), which surface (19) can contact said other connection part (9) of the second connection member (13) when the two connection parts (9,17) of the second connection member (13) are moved towards each other, in order to push the pivot member (17) in its disengaged position.

9. A system comprising installed panels according to any one of claims 5-8, wherein said pivot member (17) is provided with a cam (20) having a surface to be pushed by means of a separate disengaging tool in order to rotate the pivot member (17) from its engaged position into its disengaged position, said surface of said cam (20) being located near the back side of the plate like element (15).

10. A system comprising installed panels according to any one of the preceding claims, wherein adjacent panels (10,11) are positioned in a tiled relationship, wherein the first long edge of a panel (11) is located at the backside of an adjacent panel (10).

11. A system comprising installed panels according to any one of the preceding claims, wherein at least a number of the panels (10,11) are solar panels, wherein the plate like element (15) comprises a glass plate provided with a number of photovoltaic cells at its back side.

12. A system comprising installed panels according to any one of the preceding claims, comprising a first horizontal array of panels (1,2) and next to that array a second horizontal array of panels (3), wherein adjacent short edges of panels (1,2) in said first array are positioned in the middle of the long edges of panels (3) in the second array.

13. A rectangular panel to be installed against elongated support elements (4) provided with first and second connection bars (8, 9) extending in transverse direction, the panel (10,11) having a first long edge and parallel thereto a second long edge and two parallel short edges perpendicular to said long edges, the panel (10,11) comprising:
- a rectangular plate like element (15),
- at least two elongated holder members (14) attached to the back side of the plate like element (15) and extending parallel to said short edges of the panel (10,11), each elongated holder member comprising
- one first connection part (16) arranged along said first long edge of the panel,
- one second connection part (17) arranged along said second long edge of the panel (10, 11), wherein
said first connection parts (16) and second connection parts (17) are respectively configured for attaching the panel to the first and second bars (8, 9) of the support elements (4), **characterized in that** each first connection part comprises a clip (16) arranged to contact two opposite sides of the first connection bar (8) of the support element, such that the clips (16) are able to rotate with respect to the first bar (8) around an axis parallel to said long edges of the panel (10,11) when the clips (16) and first bar (8) are attached to each other and such that the panel can move in a direction parallel with respect to the short edges of the panel (10, 11), and **in that** each second connection part (17) comprises a pivot member (17) being able to pivot around a pivot axis (18) extending parallel to said long edges of the panel, wherein said pivot member (17) is able to engage the second connection bar of the support element by turning around said pivot axis (18) from a disengaged position into an engaged position in which these parts cannot move with respect to each other in a direction perpendicular to the plate like element, and wherein said pivot member (17) is able to disengage the second connection bar (9) by turning around said pivot axis (18) from said engaged position into said disengaged position.

14. A rectangular panel according to claim 13, wherein three elongated holder members (14) are present, each provided with a clip (16) and a pivot member (17).

15. A method for installing panels against elongated support elements (4), the panels (10,11) having a first long edge and parallel thereto a second long edge and two parallel short edges perpendicular to said long edges, whereby the panels (10,11) comprise a rectangular plate like element (15) and are to be attached with connection members (12,13) to said support elements (4), whereby the panels are provided with first connection parts (16) of a first connection member (12) and with second connection parts (17) of a second connection member (13), whereby connection parts (8,16) of two or more first connection members (12) are present along said first long edge of the panel (10,11) and two or more connection parts (9,17) of second connection members (13) are present along said second long edge of the panel (10,11), whereby other connection parts (8,9) are attached to said support elements (4), whereby the two connection parts (8,16) of each first connection member (12) are able to rotate with respect to each other around an axis parallel to said long edges of the panel (10,11) after connecting these two connection parts (8,16) with each other, and whereby said two parts (9,17) of each second connection member (13) engage each other in such manner that they cannot move with respect to each other in a direction perpendicular to the plate like element (15) of the panels (10,11), **characterized in that** two or more elongated holder members (14) are attached to the back side of the plate like elements (15) and extend parallel to said short edges of the panels (10,11), and whereby at least two holder members (14) are each provided with a first connection part (16) of a first connection member (12) and a second connection part (17) of a second connection member (13), and whereby a connection part of said first connection member (12) comprises a bar (8) extending parallel to said long edges of the panel (10,11), and whereby the other connection part of the first connection member (12) comprises a portion (16) engaging said bar (8) by contacting two opposite sides of the bar (8) in such way that the panel can move in a direction parallel with respect to the short edges of the panel (10,11), whereby the connection parts (8,16) of first connection members (12) of a panel (10,11) are connected with each other and subsequently the panel (10,11) is rotated so that the connection parts (9,17) of the second connection members (13) approach each other and then engage each other.

## Patentansprüche

1. Ein System, das installierte Panels umfasst, wobei eine Anzahl rechteckiger Panels (10, 11) mit länglichen Tragelementen (4) verbunden ist, wobei die Panels (10, 11) eine erste lange Kante und parallel dazu eine zweite lange Kante und zwei parallele kurze Kanten senkrecht zu den langen Kanten aufweisen, wobei die Panels (10, 11) ein rechteckiges plattenähnliches Element (15) umfassen, wobei das System mit Verbindungselementen (12, 13) zum Anbringen der Panels (10, 11) an den Tragelementen (4) versehen ist, wobei zwei oder mehr erste Verbindungselemente (12) entlang der ersten langen Kante eines Panels (10, 11) vorhanden sind, und zwei oder mehr zweite Verbindungselemente (13) entlang der zweiten langen Kante eines Panels (10, 11) vorhanden sind, und wobei jedes Verbindungselement (12, 13) zwei Verbindungsteile (8, 16; 9, 17) umfasst, die aneinander anbringbar sind, wobei eines der Verbindungsteile (16, 17) an einem Panel angebracht ist, und das andere Verbindungsteil (8, 9) an einem Tragelement (4) angebracht ist, wobei die zwei Verbindungsteile (8, 16) jedes ersten Verbindungselements (12) fähig sind, zueinander um eine Achse parallel zu den langen Kanten des Panels (10, 11) zu drehen, wenn diese zwei Verbindungsteile (8, 16) aneinander angebracht sind, und wobei die zwei Verbindungsteile (9, 17) jedes zweiten Verbindungselements (13) ineinander derart eingreifen, dass sie sich zueinander nicht in eine Richtung senkrecht zu dem plattenähnlichen Element (15) des Panels (10, 11) bewegen können, nachdem sie zueinander bewegt wurden, **dadurch gekennzeichnet, dass** die Panels (10, 11) eine Halterung (14) umfassen, die an der Rückseite des plattenähnlichen Elements (15) des Panels (10, 12) angebracht ist, wobei die Halterung (14) mit ersten Verbindungsteilen (16) des ersten Verbindungselements (12) und mit zweiten Verbindungsteilen (17) des zweiten Verbindungselements (13) versehen ist, und wobei ein Verbindungsteil des ersten Verbindungselements (12) eine Stange (8) umfasst, die sich parallel zu den langen Kanten des Panels (10, 11) erstreckt, und wobei das andere Verbindungsteil des ersten Verbindungselements (12) einen Abschnitt (16) umfasst, der in die Stange (8) durch Berühren zweier entgegengesetzter Seiten der Stange (8) derart eingreift, dass sich das Panel in eine Richtung parallel bezüglich der kurzen Kanten des Panels (10, 11) bewegen kann.

2. Ein System, das installierte Panels nach Anspruch 1 umfasst, wobei die Halterung zwei oder mehr längliche Halterungselemente (14) umfasst, die sich an der Rückseite des plattenähnlichen Elements (15) befinden und sich parallel zu den kurzen Kanten des Panels (10, 11) erstrecken, und dass mindestens zwei Halterungselemente (14) mit einem ersten Verbindungsteil (16) eines ersten Verbindungselements (12) und mit einem zweiten Verbindungsteil (17) eines zweiten Verbindungselements (13) versehen sind.

3. Ein System, das installierte Panels nach Anspruch 1 umfasst, wobei ein Panel (10, 11) drei Halterungselemente (14) umfasst, die jeweils mit einem ersten Verbindungsteil (16) eines ersten Verbindungselements (12) und mit einem zweiten Verbindungsteil (17) eines zweiten Verbindungselements (13) versehen sind.

4. Ein System, das installierte Panels nach einem der vorstehenden Ansprüche umfasst, wobei die Stange (8) an einem Tragelement (4) angebracht ist.

5. Ein System, das installierte Panels nach einem der vorstehenden Ansprüche umfasst, wobei das zweite Verbindungsteil ein Schwenkelement (17) umfasst, das fähig ist, um eine Schwenkachse (18), die sich parallel zu dem plattenähnlichen Element (15) erstreckt, zu schwenken, wobei das Schwenkelement (17) fähig ist, in einen Abschnitt des anderen Verbindungsteils (9) des zweiten Verbindungselements (13) durch Drehen der Schwenkachse (18) aus einer ausgerückten Position in eine eingerückte Position einzurücken, und wobei das Schwenkelement (17) fähig ist, den Abschnitt des anderen Verbindungsteils (9) des zweiten Verbindungselements (13) durch Drehen um die Schwenkachse (18) aus der eingerückten Position in die ausgerückte Position auszurücken.

6. Ein System, das installierte Panels nach Anspruch 5 umfasst, wobei sich die Schwenkachse (18) parallel zu den langen Kanten des Panels (10, 11) erstreckt.

7. Ein System, das installierte Panels nach Anspruch 5 oder 6 umfasst, wobei die Form des Schwenkelements (17) derart ist, dass sein Schwerpunkt an einer Seite einer vertikalen Ebene durch die Schwenkachse (18) des Schwenkelements (17) derart liegt, dass die Schwerkraft das Schwenkelement (17) in seine eingerückte Position schiebt.

8. Ein System, das installierte Panels nach einem der Ansprüche 5 bis 7 umfasst, wobei das Schwenkelement (17) mit einer Oberfläche (19) versehen ist, die bezüglich einer Ebene durch die Schwenkachse (18) geneigt und zu dem plattenähnlichen Element (15) des Panels (10, 11) senkrecht ist, wobei die Oberfläche (19) das andere Verbindungsteil (9) des zweiten Verbindungselements (13) berühren kann, wenn die zwei Verbindungsteile (9, 17) des zweiten Verbindungselements (13) zueinander bewegt werden, um das Schwenkelement (17) in seine ausgerückte Position zu schieben.

9. Ein System, das installierte Panels nach einem der Ansprüche 5 bis 8 umfasst, wobei das Schwenkelement (17) mit einem Nocken (20) versehen ist, der eine Oberfläche aufweist, die mittels eines getrennten Ausrückwerkzeugs zu schieben ist, um das Schwenkelement (17) aus seiner eingerückten Position in seine ausgerückte Position zu drehen, wobei die Oberfläche des Nockens (20) nahe der Rückseite des plattenähnlichen Elements (15) liegt.

10. Ein System, das installierte Panels nach einem der vorstehenden Ansprüche umfasst, wobei aneinandergrenzende Panels (10, 11) in einer kachelartigen Beziehung positioniert sind, wobei die erste lange Kante eines Panels (11) an der Rückseite eines angrenzenden Panels (10) liegt.

11. Ein System, das installierte Panels nach einem der vorstehenden Ansprüche umfasst, wobei mindestens eine Anzahl von Panels (10, 11) Solarpanels ist, wobei das plattenähnliche Element (15) eine Glasplatte umfasst, die mit einer Anzahl fotovoltaischer Zellen an ihrer Rückseite versehen ist.

12. Ein System, das installierte Panels nach einem der vorstehenden Ansprüche umfasst, die eine erste horizontale Anordnung von Panels (1, 2) und neben dieser Anordnung eine zweite Anordnung von Panels (3) umfasst, wobei aneinandergrenzende kurze Kanten von Panels (1, 2) in der ersten Anordnung in der Mitte der langen Kanten von Panels (3) in der zweiten Anordnung positioniert sind.

13. Ein rechteckiges Panel, das gegen längliche Tragelemente (4) zu installieren ist, die mit ersten und zweiten Verbindungsstangen (8, 9) versehen sind, die sich in Querrichtung erstrecken, wobei das Panel (10, 11) eine erste lange Kante und parallel dazu eine zweite lange Kante und zwei parallele kurze Kanten senkrecht zu den langen Kanten aufweist, wobei das Panel (10, 11) Folgendes umfasst:
- ein rechteckiges plattenähnliches Element (15),
- mindestens zwei längliche Halterungselemente (14), die an der Rückseite des plattenähnlichen Elements (15) angebracht sind und sich parallel zu den kurzen Kanten des Panels (10, 11) erstrecken, wobei jedes längliche Halterungselement
- ein erstes Verbindungsteil (16), das entlang der ersten langen Kante des Panels eingerichtet ist,
- ein zweites Verbindungsteil (17), das entlang der zweiten langen Kante des Panels (10, 11) eingerichtet ist, umfasst, wobei
die ersten Verbindungsteile (16) und zweiten Verbindungsteile (17) jeweils konfiguriert sind, um das Panel an der ersten und zweiten Stange (8, 9) der Tragelemente (4) anzubringen, **dadurch gekennzeichnet, dass** jedes erste Verbindungsteil einen Clip (16) umfasst, der eingerichtet ist, um zwei entgegengesetzte Seiten der ersten Verbindungsstange (8) des Tragelements derart zu berühren, dass die Clips (16) fähig sind, in Bezug auf die erste Stange (8) um eine Achse parallel zu den langen Kanten des Panels (10, 11) zu drehen, wenn die Clips (16) und die erste Stange (8) aneinander angebracht sind, und derart, dass sich das Panel in eine Richtung parallel bezüglich der kurzen Kanten des Panels (10, 11) bewegen kann, und dass jedes zweite Verbindungsteil (17) ein Schwenkelement (17) umfasst, das fähig ist, um eine Schwenkachse (18), die sich parallel zu den langen Kanten des Panels erstreckt, zu schwenken, wobei das Schwenkelement (17) fähig ist, in die zweite Verbindungsstange des Tragelements durch Drehen um die Schwenkachse (18) von einer ausgerückten Position in eine eingerückte Position, in der sich diese Teile nicht zueinander in eine Richtung senkrecht zu dem plattenähnlichen Element bewegen können, einzugreifen, und wobei das Schwenkelement (17) fähig ist, die zweite Verbindungsstange (9) durch Drehen um die Schwenkachse (18) aus der eingerückten Position in die ausgerückte Position auszurücken.

14. Ein rechteckiges Panel nach Anspruch 13, wobei drei längliche Halterungselemente (14) vorhanden sind, die jeweils mit einem Clip (16) und einem Schwenkelement (17) versehen sind.

15. Ein Verfahren zum Installieren von Panels gegen längliche Tragelemente (4), wobei die Panels (10, 11) eine erste lange Kante und parallel dazu eine zweite lange Kante und zwei parallele kurze Kanten senkrecht zu den langen Kanten aufweisen, wobei die Panels (10, 11) ein rechteckiges plattenähnliches Element (15) umfassen und mit Verbindungselementen (12, 13) an den Tragelementen (4) anzubringen sind, wobei die Panels mit ersten Verbindungsteilen (16) eines ersten Verbindungselements (12) und mit zweiten Verbindungsteilen (17) eines zweiten Verbindungselements (13) versehen sind, wodurch die Verbindungsteile (8, 16) von zwei oder mehr ersten Verbindungselementen (12) entlang der ersten langen Kante des Panels (10, 11) vorhanden sind, und zwei oder mehr Verbindungsteile (9, 17) zweiter Verbindungselemente (13) entlang der zweiten langen Kante des Panels (10, 11) vorhanden sind, wodurch andere Verbindungsteile (8, 9) an den Tragelementen (4) angebracht sind, wodurch die zwei Verbindungsteile (8, 16) jedes ersten Verbindungselements (12) fähig sind, in Bezug zueinander um eine Achse parallel zu den langen Kanten des Panels (10, 11) zu schwenken, nachdem diese zwei Verbindungsteile (8, 16) miteinander verbunden wurden, und wodurch die zwei Teile (9, 17) jedes zweiten Verbindungselements (13) ineinander derart eingreifen, dass sie sich zueinander nicht in eine Richtung senkrecht zu dem plattenähnlichen Element (15) des Panels (10, 11) bewegen können, **dadurch gekennzeichnet, dass** zwei oder mehr längliche Halterungselemente (14) an der Rückseite des plattenähnlichen Elements (15) angebracht sind und sich parallel zu den kurzen Kanten der Panels (10, 11) erstrecken, und wodurch mindestens zwei Halterungselemente (14), die jeweils mit einem ersten Verbindungsteil (16) eines ersten Verbindungselements (12) und einem zweiten Verbindungsteil (17) eines zweiten Verbindungselements (13) versehen sind, und wodurch ein Verbindungsteil des ersten Verbindungselements (12) eine Stange (8) umfasst, die sich parallel zu den langen Kanten des Panels (10, 11) erstreckt, und wodurch das andere Verbindungsteil des ersten Verbindungselements (12) einen Abschnitt (16) umfasst, der die Stange (8) durch Berühren zweier entgegengesetzter Seiten der Stange (8) derart einrückt, dass sich das Panel in eine Richtung parallel zu den kurzen Kanten des Panels (10, 11) bewegen kann, wodurch die Verbindungsteile (8, 16) der ersten Verbindungselemente (12) eines Panels (10, 11) miteinander verbunden werden und das Panel (10, 11) anschließend derart gedreht wird, dass die Verbindungsteile (9, 17) des zweiten Verbindungselements (13) sich einander nähern und ineinander eingreifen.

## Revendications

1. Un système comprenant des panneaux installés, dans lequel un certain nombre de panneaux rectangulaires (10, 11) sont raccordés à des éléments de support allongés (4), les panneaux (10, 11) présentant un premier bord long et parallèle à celui-ci un second bord long et deux bords courts parallèles perpendiculaires auxdits bords longs, dans lequel les panneaux (10, 11) comprennent un élément de type plaque rectangulaire (15), le système étant pourvu d'organes de raccordement (12, 13) pour attacher les panneaux (10, 11) aux éléments de support (4), dans lequel deux premiers organes de raccordement (12) ou plus sont présents le long dudit premier bord long d'un panneau (10, 11) et deux seconds organes de raccordement (13) ou plus sont présents le long du second bord long d'un panneau (10, 11), et dans lequel chaque organe de raccordement (12, 13) comprend deux parties de raccordement (8, 16 ; 9, 17) qui peuvent être attachées l'une à l'autre, dans lesquelles l'une desdites parties de raccordement (16, 17) est attachée à un panneau et l'autre partie de raccordement (8, 9) est attachée à un élément de support (4), dans lequel lesdites deux parties de raccordement (8, 16) de chaque premier organe de raccordement (12) sont capables de tourner l'une vis-à-vis de l'autre autour d'un axe parallèle auxdits bords longs du panneau (10, 11) lorsque ces deux parties de raccordement (8, 16) sont attachées l'une à l'autre et dans lequel lesdites deux parties de raccordement (9, 17) de chaque second organe de raccordement (13) s'engagent l'une avec l'autre de sorte à ne pas pouvoir se déplacer l'une vis-à-vis de l'autre dans une direction perpendiculaire à l'élément de type plaque (15) du panneau (10, 11) après leur déplacement l'une vers l'autre, **caractérisé en ce que** les panneaux (10, 11) comprennent un dispositif de maintien (14) qui est attaché au côté arrière de l'élément de type plaque (15) du panneau (10, 12), dans lequel le dispositif de maintien (14) est pourvu de premières parties de raccordement (16) du premier organe de raccordement (12) et de secondes parties de raccordement (17) des seconds organes de raccordement (13), et dans lequel une partie de raccordement dudit premier organe de raccordement (12) comprend une barre (8) s'étendant parallèle auxdits bords longs du panneau (10, 11) et dans lequel l'autre partie de raccordement du premier organe de raccordement (12) comprend une portion (16) engageant ladite barre (8) en entrant en contact avec deux côtés opposés de la barre (8) de telle sorte que le panneau puisse se déplacer dans une direction parallèle vis-à-vis des bords courts du panneau (10, 11).

2. Un système comprenant des panneaux installés selon la revendication 1, dans lequel le dispositif de maintien comprend deux organes de dispositif de maintien allongés (14) ou plus situés au niveau du côté arrière de l'élément de type plaque (15) et s'étendant parallèlement auxdits bords courts du panneau (10, 11) et en ce qu'au moins deux organes de dispositif de maintien (14) sont pourvus d'une première partie de raccordement (16) d'un premier organe de raccordement (12) et d'une seconde partie de raccordement (17) d'un second organe de raccordement (13).

3. Un système comprenant des panneaux installés selon la revendication 1, dans lequel un panneau (10, 11) comprend trois desdits organes de dispositif de maintien (14), chacun pourvu d'une première partie de raccordement (16) d'un premier organe de raccordement (12) et d'une seconde partie de raccordement (17) d'un second organe de raccordement (13).

4. Un système comprenant des panneaux installés selon l'une quelconque des revendications précédentes, dans lequel ladite barre (8) est attachée à un élément de support (4).

5. Un système comprenant des panneaux installés selon l'une quelconque des revendications précédentes, dans lequel la seconde partie de raccordement comprend un organe pivot (17) qui est capable de pivoter autour d'un axe de pivot (18) s'étendant parallèle audit élément de type plaque (15), dans lequel ledit organe pivot (17) est capable d'engager une portion de l'autre partie de raccordement (9) du second organe de raccordement (13) en tournant autour dudit axe de pivot (18) depuis une position désengagée jusque dans une position engagée, et dans lequel ledit organe pivot (17) est capable de désengager ladite portion de l'autre partie de raccordement (9) du second organe de raccordement (13) en tournant autour dudit axe pivot (18) depuis ladite position engagée jusque dans ladite position désengagée.

6. Un système comprenant des panneaux installés selon la revendication 5, dans lequel ledit axe de pivot (18) s'étend parallèle auxdits bords longs du panneau (10, 11).

7. Un système comprenant des panneaux installés selon la revendication 5 ou 6, dans lequel la forme de l'organe pivot (17) est telle que son centre de gravité est situé au niveau d'un côté d'un plan vertical à travers l'axe de pivot (18) de l'organe pivot (17), de sorte que la gravitation pousse l'organe pivot (17) dans sa position engagée.

8. Un système comprenant des panneaux installés selon l'une quelconque des revendications 5 à 7, dans lequel l'organe pivot (17) est pourvu d'une surface (19) qui est inclinée vis-à-vis d'un plan à travers ledit axe de pivot (18) et perpendiculaire à l'élément de type plaque (15) du panneau (10, 11), laquelle surface (19) peut entrer en contact avec ladite autre partie de raccordement (9) du second organe de raccordement (13) lorsque les deux parties de raccordement (9, 17) du second organe de raccordement (13) sont déplacées l'une vers l'autre, afin de pousser l'organe pivot (17) dans sa position désengagée.

9. Un système comprenant des panneaux installés selon l'une quelconque des revendications 5 à 8, dans lequel ledit organe pivot (17) est pourvu d'une came (20) présentant une surface à pousser au moyen d'un outil de désengagement séparé afin de faire tourner l'organe pivot (17) depuis sa position engagée jusque dans sa position désengagée, ladite surface de ladite came (20) étant située près du côté arrière de l'élément de type plaque (15).

10. Un système comprenant des panneaux installés selon l'une quelconque des revendications précédentes, dans lequel des panneaux adjacents (10, 11) sont positionnés dans une relation de tuilage, dans lequel le premier bord long d'un panneau (11) est situé au niveau du côté arrière d'un panneau adjacent (10).

11. Un système comprenant des panneaux installés selon l'une quelconque des revendications précédentes, dans lequel au moins un certain nombre des panneaux (10, 11) sont des panneaux solaires, dans lequel l'élément de type plaque (15) comprend une plaque en verre pourvue d'un certain nombre de cellules photovoltaïques au niveau de son côté arrière.

12. Un système comprenant des panneaux installés selon l'une quelconque des revendications précédentes, comprenant un premier réseau horizontal de panneaux (1, 2) et à côté de ce réseau un second réseau horizontal de panneaux (3), dans lequel des bords courts adjacents de panneaux (1, 2) dans ledit premier réseau sont positionnés au milieu de bords longs de panneaux (3) dans le second réseau.

13. Un panneau rectangulaire à installer contre des éléments de support allongés (4) pourvus de première et seconde barres de raccordement (8, 9) s'étendant en direction transversale, le panneau (10, 11) présentant un premier bord long et parallèle à celui-ci un second bord long et deux bords courts parallèles perpendiculaires auxdits bords longs, le panneau (10, 11) comprenant :
- un élément de type plaque rectangulaire (15),
- au moins deux organes de dispositif de maintien allongés (14) attachés au côté arrière de l'élément de type plaque (15) et s'étendant parallèles auxdits bords courts du panneau (10, 11), chaque organe de dispositif de maintien allongé comprenant
- une première partie de raccordement (16) agencée le long dudit premier bord long du panneau,
- une seconde partie de raccordement (17) agencée le long dudit second bord long du panneau (10, 11), dans lequel
lesdites premières parties de raccordement (16) et secondes parties de raccordement (17) sont respectivement configurées pour attacher le panneau aux première et seconde barres (8, 9) des éléments de support (4), **caractérisé en ce que**
chaque première partie de raccordement comprend une attache (16) agencée pour entrer en contact avec deux côtés opposés de la première barre de raccordement (8) de l'élément de support, de sorte que les attaches (16) soient capables de tourner vis-à-vis de la première barre (8) autour d'un axe parallèle auxdits bords longs du panneau (10, 11), lorsque les attaches (16) et la première barre (8) sont attachées les unes aux autres et de sorte que le panneau puisse se déplacer dans une direction parallèle vis-à-vis des bords courts du panneau (10, 11), et **en ce que** chaque seconde partie de raccordement (17) comprend un organe pivot (17) qui est capable de pivoter autour d'un axe de pivot (18) s'étendant parallèle auxdits bords longs du panneau, dans lequel ledit organe de pivot (17) est capable d'engager la seconde barre de raccordement de l'élément de support en tournant autour dudit axe de pivot (18) depuis une position désengagée jusque dans une position engagée dans laquelle ces parties ne peuvent pas se déplacer l'une vis-à-vis de l'autre dans une direction perpendiculaire à l'élément de type plaque, et dans lequel ledit organe pivot (17) est capable de désengager la seconde barre de raccordement (9) en tournant autour dudit axe de pivot (18) depuis ladite position engagée jusque dans ladite position désengagée.

14. Un panneau rectangulaire selon la revendication 13, dans lequel trois organes de dispositif de maintien allongés (14) sont présents, chacun pourvu d'une attache (16) et d'un organe pivot (17).

15. Un procédé d'installation de panneaux contre des éléments de support allongés (4), les panneaux (10, 11) présentant un premier bord long et parallèle à celui-ci un second bord long et deux bords courts parallèles perpendiculaires auxdits bords longs, selon lequel les panneaux (10, 11) comprennent un élément de type plaque rectangulaire (15) et doivent être attachés avec des organes de raccordement (12, 13) auxdits éléments de support (4), selon lequel les panneaux sont pourvus de premières parties de raccordement (16) d'un premier organe de raccordement (12) et de secondes parties de raccordement (17) d'un second organe de raccordement (13), selon lequel des parties de raccordement (8, 16) de deux premiers organes de raccordement (12) ou plus sont présentes le long dudit premier bord long du panneau (10, 11) et deux parties de raccordement (9, 17) ou plus des seconds organes de raccordement (13) sont présentes le long dudit second bord long du panneau (10, 11), selon lequel d'autres parties de raccordement (8, 9) sont attachées auxdits éléments de support (4), selon lequel les deux parties de raccordement (8, 16) de chaque premier organe de raccordement (12) sont capables de tourner l'une vis-à-vis de l'autre autour d'un axe parallèle auxdits bords longs du panneau (10, 11) après raccordement de ces deux parties de raccordement (8, 16) l'une avec l'autre, et selon lequel lesdites deux parties (9, 17) de chaque second élément de raccordement (13) s'engagent l'une avec l'autre de sorte à ne pas pouvoir se déplacer l'une vis-à-vis de l'autre dans une direction perpendiculaire à l'élément de type plaque (15) du panneau (10, 11), **caractérisé en ce que** deux organes de dispositif de maintien allongés (14) ou plus sont attachés au côté arrière des éléments de type plaque (15) et s'étendent parallèles auxdits bords courts des panneaux (10, 11), et selon lequel au moins deux organes de dispositif de maintien (14) sont chacun pourvus d'une première partie de raccordement (16) d'un premier organe de raccordement (12) et d'une seconde partie de raccordement (17) d'un second organe de raccordement (13), et selon lequel une partie de raccordement dudit premier organe de raccordement (12) comprend une barre (8) s'étendant parallèle auxdits bords longs du panneau (10, 11), et selon lequel l'autre partie de raccordement du premier organe de raccordement (12) comprend une portion (16) engageant ladite barre (8) en entrant en contact avec deux côtés opposés de la barre (8) de telle sorte que le panneau puisse se déplacer dans une direction parallèle vis-à-vis des bords courts du panneau (10, 11), selon lequel les parties de raccordement (8, 16) des premiers organes de raccordement (12) d'un panneau (10, 11) sont raccordées l'une avec l'autre et ultérieurement le panneau (10, 11) est tourné de sorte que les parties de raccordement (9, 17) des seconds organes de raccordement (13) s'approchent l'une de l'autre, puis s'engagent l'une avec l'autre.
